(19) Europäisches Patentamt
European Patent Office
Office européen des brevets

(11) **EP 2 759 519 A1**

## EUROPEAN PATENT APPLICATION
published in accordance with Art. 153(4) EPC

(43) Date of publication:
**30.07.2014 Bulletin 2014/31**

(21) Application number: **11872860.9**

(22) Date of filing: **22.09.2011**

(51) Int Cl.:
*C01B 31/02* [(2006.01)]       *B01D 61/36* [(2006.01)]
*B01D 71/02* [(2006.01)]

(86) International application number:
**PCT/JP2011/071695**

(87) International publication number:
**WO 2013/042262 (28.03.2013 Gazette 2013/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **NGK Insulators, Ltd.
Nagoya-shi, Aichi 467-8530 (JP)**

(72) Inventors:
• **ICHIKAWA, Akimasa
  Aichi 467-8530 (JP)**

• **SAKAI, Tetsuya
  Aichi 467-8530 (JP)**
• **KINOSHITA, Naoto
  Aichi 467-8530 (JP)**
• **ISODA, Yoshinori
  Aichi 467-8530 (JP)**
• **KIMATA, Takafumi
  Aichi 467-8530 (JP)**

(74) Representative: **TBK
Bavariaring 4-6
80336 München (DE)**

(54) **METHOD FOR PRODUCING CARBON FILM**

(57)    Provided is a method of producing a carbon membrane including dipping a porous support in a suspension of a phenolic resin or a suspension of a phenolic resin precursor, drying the resulting support to form a membrane made of the phenolic resin or the phenolic resin precursor, and heat treating and thereby carbonizing the resulting membrane into a carbon membrane.

EP 2 759 519 A1

**Description**

Technical Field

The present invention relates to a method for producing a carbon membrane. More specifically, the invention relates to a method for producing a carbon membrane to be used for selectively separating a specific component from a mixed component.

Background Art

In recent years, a zeolite membrane or a carbon membrane has been utilized for separating a specific component from a mixed component from the standpoint of protecting the environment and effectively utilizing a base material. In particular, a carbon membrane is superior in acid resistance to a zeolite membrane so that it can be used for the separation of an organic acid-containing mixed component. As such a carbon membrane, there is disclosed a molecular sieve carbon membrane having a carbon content of 80% or more, having many pores with a pore diameter of 1 nm or less, and obtained by applying a liquid thermosetting resin onto the surface of a ceramic porous body to form a polymer membrane and then heat treating the resulting polymer membrane at from 550 to 1100°C in a non-oxidizing atmosphere (refer to Patent Document 1).

There is also disclosed a separation membrane-porous body composite provided so as to improve a flux (permeate flux) and selectivity (refer to Patent Document 2). This separation membrane-porous body composite has a porous body and a carbon membrane, wherein a composite layer having a thickness of 1 mm or less is formed at the interface between the porous body and the carbon membrane. At least a portion of the composite layer is made of the same material as the material of the separation membrane. Patent Document 2 discloses a method of producing this separation membrane-porous body composite including a step of bringing a solution for forming a separation membrane into contact with the surface of a porous body while supplying a pressurized gas into the pores of the porous body.

There is also disclosed a method of producing a separation membrane capable of uniformly drying and imidizing the entirety of a membrane which has been made of a precursor solution of the separation membrane and has been formed on the surface of the through-holes of a monolithic base material (refer to Patent Document 3). This production method does not require a troublesome step such as placement of a monolithic base material in a drying apparatus and is therefore excellent in productivity.

Citation List

Patent Documents

    [Patent Document 1] JP 3647985
    [Patent Document 2] WO2008/056803
    [Patent Document 3] WO2008/078442

Summary of the Invention

When a high viscosity precursor solution such as polyimide is used as a precursor solution of a separation membrane to be applied to a porous support, it can be applied uniformly by using the methods disclosed in Patent Documents 2 and 3. When a low viscosity precursor solution such as phenolic resin is applied, however, uniform application of the solution is difficult. It sometimes increases the number of membrane formation times.

A carbon membrane obtained using polyimide as a precursor sometimes shows the reduction in separation performance, depending on the conditions employed in separating an acidic solution. A phenolic resin should therefore be used as a precursor of a carbon membrane. Accordingly, there is a demand for the improvement which facilitates the above-mentioned uniform application of a low viscosity precursor solution such as phenolic resin with less application times.

The invention has been made with a view to overcoming such a problem of the conventional technology. An object of the invention is to provide a carbon membrane producing method capable of forming a uniform carbon membrane while reducing the number of membrane formation times and thereby reducing the number of steps.

With a view to achieving the above-mentioned object, the present inventors have carried out an extensive investigation. As a result, it has been found that the above-mentioned object can be achieved by dipping a porous support in a suspension of a separation membrane precursor when the separation membrane precursor is applied to the surface of the porous support, leading to the completion of the invention.

In the invention, there are therefore provided methods of producing a carbon membrane as described below.

[1] A method of producing a carbon membrane, including dipping a porous support in a suspension of a phenolic resin or a suspension of a phenolic resin precursor, drying the resulting support to form thereon a membrane made of the phenolic resin or the phenolic resin precursor, and heat treating and thereby carbonizing the membrane into a carbon membrane.

[2] The method of producing a carbon membrane as described above in [1], wherein the phenolic resin or the phenolic resin precursor is a powdery substance.

[3] The method of producing a carbon membrane as described above in [1] or [2], wherein the suspension has turbidity of from 1 to 1000 degrees.

[4] The method of producing a carbon membrane as described above in any of [1] to [3], wherein the suspension has turbidity of from 100 to 1000 degrees.

[5] The method of producing a carbon membrane as described above in any of [1] to [4], wherein a vehicle of the suspension is N-methyl-2-pyrrolidinone.

[6] The method of producing a carbon membrane as described above in any of [1] to [5], wherein the porous support is equipped with a porous base material having a plurality of cells communicating from one of the end faces to the other end face of the porous base material.

[7] The method of producing a carbon membrane as described above in [6], wherein the porous support is equipped with, in addition to the porous base material, one or more layers comprised of particles having an average particle size smaller than that of particles constituting the porous base material and an outermost layer of the porous support has an average pore size of from 0.01 to 1 $\mu$m.

The method of producing a carbon membrane according to the invention is effective for reducing the number of membrane formation times and thereby reducing the number of steps.

Brief Description of the Drawings

[FIG. 1] FIG. 1 is a schematic perspective view showing one embodiment of the porous support according to the invention.

[FIG. 2] FIG. 2 is an enlarged schematic view showing a portion of the cross-section of an inner wall surface of a cell of the porous support according to the invention.

Mode for Carrying out the Invention

Embodiments of the invention will hereinafter be described. The invention is however not limited to or by these embodiments. It is to be understood that the following embodiments even after changed or improved based on the ordinary knowledge of those skilled in the art without departing from the spirit of the invention are also embraced within the scope of the invention.

The method of producing a carbon membrane according to the invention is a method of obtaining a carbon membrane by dipping a porous support in a suspension of a phenolic resin or a suspension of a phenolic resin precursor, drying the resulting porous support to form a membrane made of the phenolic resin or the phenolic resin precursor, and heat treating and thereby carbonizing the resulting membrane. This production method uses so-called dip coating technique, but it is different therefrom in that a suspension of a phenolic resin or a suspension of a phenolic resin precursor is used for dipping the porous support therein.

In dip coating, uniform application onto the surface of a porous support is usually required so that a solution having a raw material dissolved uniformly therein is used. Using a solution having, as a raw material thereof, a phenolic resin or a phenolic resin precursor however makes it difficult to uniformly apply the solution, because the viscosity of solution gets lowered. This leads to a problem, that is, an increase in the number of membrane formation times (in other words, an increase in the number of steps).

The method of producing a carbon membrane according to the invention uses a suspension in which a raw material has not been dissolved completely but has been suspended so that even if the viscosity of the suspension is low, a phenolic resin or a phenolic resin precursor is accumulated on the surface of the porous support, thereby its penetration can be prevented. In addition, a membrane made of a phenolic resin or a phenolic resin precursor can be formed uniformly. This makes it possible to reduce the number of membrane formation times and therefore, reduce the number of steps.

(Porous support)

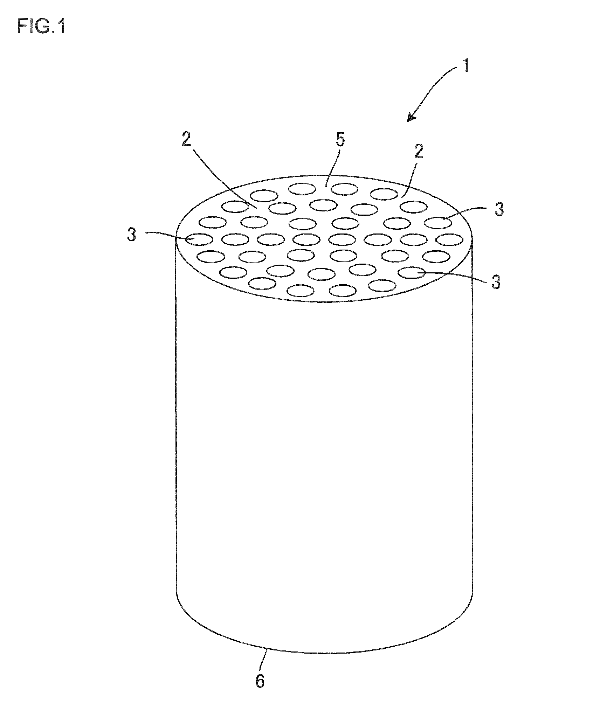

The shape of the porous support is not particularly limited and it can be selected as needed, depending on the using purpose. For example, there is, as illustrated in FIG. 1, a lotus-like columnar (which will hereinafter be called "monolithic") body equipped with a porous base material 2 in which a plurality of cells 3 communicating from one end face 5 to the other end face 6 has been formed. Instead, it may be a honeycomb-shaped, disk-shaped, polygonal plate-shaped, cylindrical such as circular cylindrical or square cylindrical, or columnar such as circular columnar or square columnar body. From the standpoint of a ratio of a membrane area relative to a volume or weight, it is preferably a monolithic or honeycomb-shaped body, more preferably a monolithic body.

The size of the porous support is not particularly limited and can be selected as needed depending on the using purpose insofar as it satisfies the strength necessary for a support and at the same time does not damage the passage of a component to be separated. The porous support has an average pore size of preferably from 0.01 to 50 $\mu$m. Further, the porous support has a porosity of preferably from 25 to 55% from the standpoint of the strength and permeability of the porous support itself. The measurement method of the average pore size or porosity of the porous support is not particularly limited and it can be measured using, for example, a mercury intrusion technique.

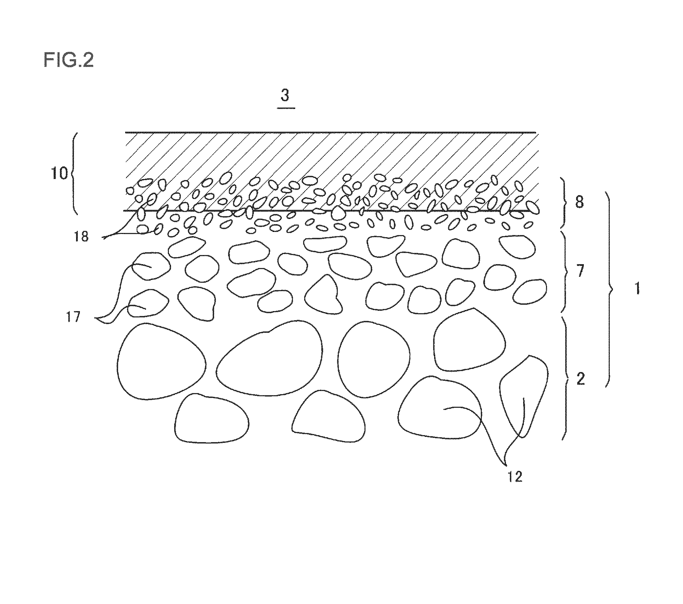

As illustrated in FIG. 2, a porous support 1 has preferably a porous base material 2, and layers 7 and 8 respectively comprised of particles 17 and 18 having an average particle size smaller than that of particles 12 constituting the porous base material 2. In FIG. 2, the porous support 1 has an intermediate layer 7 and an outermost layer 8, but it may have another layer if necessary. When the porous support 1 has such layers 7 and 8, the surface to be provided with a carbon membrane 10 thereon becomes smoother and the membrane can be formed as a more uniform one.

The particles constituting the porous support are preferably ceramic materials such as alumina, silica, cordierite, mullite, titania, zirconia, and silicon carbide from the standpoint of strength and chemical stability. The particles constituting the porous support have an average particle size of from 0.03 to 200 $\mu$m. Incidentally, a measurement method of the average particle size of the particles is not particularly limited and it can be measured using a conventionally known method.

The porous support can be manufactured using a conventionally known method. It can be manufactured, for example, by forming the particles constituting a porous support into a porous base material by extrusion and then firing it. When the porous support has a plurality of layers, these layers can be formed by depositing particles having an average particle size smaller than that of the particles constituting the porous support on the surface of the porous base material by a filtration deposition method, followed by firing. As the particles, particles of the same kind as the particles constituting the porous support can be used.

(Phenolic resin or precursor of phenolic resin)

The phenolic resin is not particularly limited and a conventionally known one can be used. Examples include "Bellpearl S899" "Bellpearl S890", and "Bellpearl S870" (each, product of Air Water Inc.), "Sumilite Resin PR53056" (product of Sumitomo Bakelite), and "Resitop PSK2320" and "Marilin HF" (each, product of Gun Ei Chemical Industry). Of these, "Bellpearl S899", "Bellpearl S890", and "Bellpearl S870", which are powdery substances, are preferred.

The phenolic resin has a weight average molecular weight of preferably from 3000 to 10000, more preferably from 4000 to 10000. Using a phenolic resin having a weight average molecular weight within the above-mentioned range makes it possible to provide a membrane with high selectivity. When the phenolic resin has a weight average molecular weight exceeding 10000, defects are likely to occur due to shrinkage of the membrane during heat treatment or carbonization, which may deteriorate the selectivity.

The phenolic resin precursor is also not particularly limited and a conventionally known one can be used. Examples of the precursor include resol resins. Of these, "Bellpearl S series", which are in powdery form, are preferred.

(Suspension)

The suspension of a phenolic resin or the suspension of a phenolic resin precursor to be used for dipping is not particularly limited. The suspension has a turbidity of preferably from 1 to 1000 degrees, more preferably from 100 to 1000 degrees, particularly preferably from 300 to 1000 degrees. The turbidity of the suspension can be measured using a transmitted light measuring system "TR-55" (trade name), product of Kasahara Chemical Instruments.

The vehicle to be used for preparing the suspension of a phenolic resin or the suspension of a phenolic resin precursor is not particularly limited. Specific examples include N-methyl-2-pyrrolidinone and ethanol.

A process for preparing the suspension of a phenolic resin or the suspension of a phenolic resin precursor is not particularly limited. It can be prepared, for example, by mixing and stirring a raw material and a vehicle and filtering the resulting mixture through a certain filter paper or passing the resulting mixture through a sieve having a specific opening size to remove raw material particles having an excessively large average particle size.

The method of producing a carbon membrane according to the invention is a method for obtaining a carbon membrane by dipping the porous support in the suspension, drying the resulting porous support to form a membrane made of the phenolic resin or the phenolic resin precursor, and then heat treating and carbonizing the membrane. The porous support can be dipped using a conventionally known dipping method. It is preferred to employ a so-called pressure dip method in which dipping of a porous support through pores thereof is conducted while applying a pressure. In this case, the pressure is preferably from 1 to 1000 kPa, more preferably from 10 to 500 kPa, particularly preferably from 50 to 100 kPa.

Drying treatment is not particularly limited and it is conducted using a conventionally known method. More specifically, the porous support dipped in the suspension can be dried by heat treating it under the conditions at from 90 to 300°C for from 0.5 to 60 hours.

Although the conditions of the heat treatment for carbonization are not particularly limited, the heat treatment is conducted preferably in a non-oxidizing atmosphere. The term "non-oxidizing atmosphere" means an atmosphere in which the membrane made of the phenolic resin or the phenolic resin precursor is not oxidized even by heating within the temperature range at the time of heat treatment. More specifically, it means an atmosphere in an inert gas such as nitrogen or argon or in vacuum.

As the more specific heat treatment conditions, the temperature is preferably from 400 to 1200°C, more preferably from 600 to 900°C. When the heat treatment is conducted at a temperature lower than 400°C, pores are not formed because of insufficient carbonization and the resulting membrane sometimes fails to exhibit separation performance. When the heat treatment is conducted at a temperature higher than 1200°C, on the other hand, the separation performance may be lowered because of reduction in strength or excessive densification of the membrane.

The carbon membrane has an average pore size of preferably from 0.2 to 1.0 nm. When the average pore size is less than 0.2 nm, a loaded component may clog the pores therewith to reduce the permeation amount of the component to be separated. When the average pore size exceeds 1.0 nm, on the other hand, reduction in the selectivity improving effect may occur. The measurement method of the average pore size of the carbon membrane is not particularly limited and the average pore size can be measured, for example, by a gas permeation method.

The thickness of the carbon membrane is preferably from 0.01 to 10 $\mu$m, more preferably from 0.01 to 0.5 $\mu$m. If the thickness is less than 0.01 $\mu$m, the selectivity or strength may be lowered. On the other hand, if the thicknesses exceed 10 $\mu$m, the passage of the component to be separated may be lowered. The measurement method of the thickness of the carbon membrane is not particularly limited and it can be measured using, for example, a scanning electron microscope.

Examples

The invention will next be described more specifically based on Examples, but it should be borne in mind that the invention is not limited to these Examples. Incidentally, "part" or "parts" and "%" in Examples and Comparative Examples are on a mass basis unless otherwise specified. Measurement methods of various physical properties and evaluation methods of various properties will be shown below.

[Turbidity (degree)]: It was measured using a transmitted light measuring system "TR-55" (trade name; product of Kasahara Chemical Instruments).

[Separation coefficient $\alpha$]: Separation coefficient was calculated by substituting each concentration in the following equation.

$$\text{Separation coefficient } \alpha = ((\text{ethanol concentration of permeated liquid})/(\text{water concentration of permeated liquid}))/((\text{ethanol concentration of supplied liquid})/(\text{water concentration of supplied liquid}))$$

[Permeate flux (Flux) (kg/m$^2$h)]: In a water-acetic acid pervaporation separation test, a permeated liquid from the side surface of a porous support was collected in a liquid nitrogen trap and a permeation coefficient was calculated by dividing the mass of the permeated liquid thus collected by a sampling time and a membrane area.

(Example 1)

A raw material phenolic resin powder ("Bellpearl S899", trade name; product of Air Water) and N-methyl-2-pyrrolidone were mixed so as to give a mass ratio of 10:90 and the resulting mixture was stirred at 25°C for 24 hours. More specifically, 3 kg of the phenolic resin powder was added slowly at an introduction rate of 10 g/min to 27 kg of N-methyl-2-pyrrolidone which was under stirring in a propeller stirrer. A portion of the suspension thus obtained was passed through a filter paper No. 5A (pore size: 7 $\mu$m) made by Advantec to remove the undissolved residue.

After alumina particles having an average particle size of 3 $\mu$m were deposited on a monolithic porous base material made of alumina and having a diameter of 3 cm, a length of 16 cm, an average particle size of 50 $\mu$m, and an average pore size of 12 $\mu$m by using a filtration membrane formation method, the resulting porous base material was fired to form an intermediate layer having a thickness of 200 $\mu$m and an average pore size of 0.6 $\mu$m. Titania particles having an average particle size of 0.3 $\mu$m were deposited on the intermediate layer by using a filtration membrane formation method, followed by firing to form an outermost layer having a thickness of 30 $\mu$m and an average pore size of 0.1 $\mu$m. In such a manner, a porous support was obtained. A membrane of the afore-mentioned suspension of a phenolic resin precursor was formed on the porous support by a dipping method, followed by drying. The dried membrane was heat treated at from 200 to 350°C under the atmospheric condition and a membrane was formed on the porous support by thermosetting. After thermosetting, the air tightness of the membrane was evaluated based on a gas permeation amount. Until the air tightness exceeded predetermined air tightness, membrane formation was repeated. Then, the membrane was carbonized at 700°C in vacuum to form a carbon membrane on the surface of the porous support. The carbon membrane thus obtained was then pervaporated at 50°C with a 50%/50% solution of water and ethanol and then heat treated at 80°C for 100 hours.

The separation performance of the carbon membrane thus obtained was evaluated by a water-acetic acid pervaporation separation test (test conditions: water/acetic acid = 30%/70%, supplied liquid temperature: 70°C, pressure on the permeation side: 6.7 kPa). The results are shown in Table 1.

(Examples 2 to 10 and Comparative Example)

A suspension or solution was prepared in a manner similar to that of Example 1 except that the raw material, vehicle, and filtration method as shown in Table 1 were used instead. By using the suspension or solution thus obtained, a carbon membrane was formed on a porous support the number of times as shown in Table 1. Both turbidity of the suspension or solution and evaluation results of the separation performance of the carbon membrane thus obtained are shown in Table 1.

[Table 1]

| | Raw material | Vehicle | Filtration method | Turbidity (degree) | The number of membrane formation (times) | Separation coefficient ($\alpha$) | Permeate flux (flux) (kg/m$^2$h) |
|---|---|---|---|---|---|---|---|
| Example 1 | S899 | N-methyl-2-pyrrolidinone | Filter paper 5A | 1.5 | 4 | 50 | 1.3 |
| Example 2 | S899 | N-methyl-2-pyrrolidinone | 25 $\mu$m sieve | 160 | 3 | 121 | 1.2 |
| Example 3 | S899 | N-methyl-2-pyrrolidinone | 100 $\mu$m sieve | 350 | 2 | 305 | 1.2 |
| Example 4 | S899 | N-methyl-2-pyrrolidinone | None | 1000 | 2 | 119 | 1.2 |
| Example 5 | S890 | N-methyl-2-pyrrolidinone | Filter paper 5A | 1.5 | 5 | 32 | 1.3 |
| Example 6 | S890 | N-methyl-2-pyrrolidinone | 25 $\mu$m sieve | 220 | 3 | 157 | 1.1 |
| Example 7 | S890 | N-methyl-2-pyrrolidinone | 100 $\mu$m sieve | 540 | 2 | 106 | 1.1 |
| Example 8 | S890 | N-methyl-2-pyrrolidinone | None | Unmeasurable | 2 | 28 | 1.2 |
| Example 9 | S899 | Ethanol | 100 $\mu$m sieve | 280 | 4 | 124 | 1 |
| Example 10 | PR53056 | N-methyl-2-pyrrolidinone | None | 1.5 | 4 | 138 | 0.5 |
| Comp. Ex. | U-varnish A | N-methyl-2-pyrrolidinone | None | 1.6 | 3 | 7 | 0.9 |

The kind of the raw material and the filtration method shown in Table 1 will next be described in detail.

(Raw material)

Bellpearl S890 ("Bellpearl S890", trade name; product of Air Water)
PR53056 ("Sumilite resin PR53056", trade name; product of Sumitomo Bakelight, in liquid form)
U-Varnish A ("U-varnish A", trade name; product of Ube Industries, polyamic acid solution)

(Filtration method)

A 25-$\mu$m sieve: filtration through a sieve having an opening size of 25 $\mu$m.
A 100-$\mu$m sieve: filtration through a sieve having an opening size of 100 $\mu$m.
When "PR53056" was used as the raw material, the suspension was prepared so as to have a concentration of 10%.
As is apparent from Table 1, the carbon membranes (Examples 1 and 5) formed using a filter paper as a filtration method and a suspension having a turbidity of 1.5 degrees had a lower separation coefficient $\alpha$ and required a larger number of membrane formation times, compared with the carbon membranes (Examples 2, 3, 6, and 7) formed using a suspension filtrated using a sieve. On the other hand, the carbon membrane (Example 8) formed using a suspension having an unmeasurable turbidity exceeding 1000 degrees had a low separation coefficient $\alpha$. The carbon membrane (Example 9) formed using a suspension having ethanol as a vehicle required a larger number of membrane formation times and had a little smaller permeate flux (Flux). The carbon membrane (Example 10) obtained using a suspension using, as a raw material thereof, a phenolic resin in liquid form required a large number of membrane formation times and had a low permeate flux (flux). The carbon membrane (Comparative Example) formed using, as a precursor thereof, a polyimide resin formed using a solution using, as a raw material thereof, U-varnish A had a much lower separation coefficient $\alpha$ of 7 and a lower permeate flux (flux) compared with the carbon membranes (Examples 1 to 10) using a phenolic resin as a precursor.

Industrial Applicability

The carbon membrane obtained using the method of producing a carbon membrane according to the invention can be used as a filter for selectively separating a specific component from an acid-containing mixed component.

Description of Reference Numerals

1: porous support, 2: porous base material, 3: cell, 5: one of the end faces, 6: the other end face, 7: intermediate layer, 8: outermost layer, 10: carbon membrane, 12, 17, 18: particles

**Claims**

1. A method of producing a carbon membrane, comprising dipping a porous support in a suspension of a phenolic resin or a suspension of a phenolic resin precursor, drying the resulting support to form thereon a membrane made of the phenolic resin or the phenolic resin precursor, and heat treating and thereby carbonizing the membrane into a carbon membrane.

2. The method of producing a carbon membrane according to Claim 1, wherein the phenolic resin or the phenolic resin precursor is a powdery substance.

3. The method of producing a carbon membrane according to Claim 1 or 2, wherein the suspension has turbidity of from 1 to 1000 degrees.

4. The method of producing a carbon membrane according to any one of Claims 1 to 3, wherein the suspension has turbidity of from 100 to 1000 degrees.

5. The method of producing a carbon membrane according to any one of Claims 1 to 4, wherein a vehicle of the suspension is N-methyl-2-pyrrolidinone.

6. The method of producing a carbon membrane according to any one of Claims 1 to 5, wherein the porous support has a porous base material having a plurality of cells communicating from one of the end faces to the other end face of the porous base material.

7. The method of producing a carbon membrane according to Claim 6, wherein the porous support has, in addition to the porous base material, one or more layers made of particles of an average particle size smaller than that of particles constituting the porous base material and an outermost layer of the porous support has an average pore size of from 0.01 to 1 $\mu$m.

FIG.1

FIG.2

## INTERNATIONAL SEARCH REPORT

| International application No. |
| --- |
| PCT/JP2011/071695 |

**A. CLASSIFICATION OF SUBJECT MATTER**
*C01B31/02*(2006.01)i, *B01D61/36*(2006.01)i, *B01D71/02*(2006.01)i

According to International Patent Classification (IPC) or to both national classification and IPC

**B. FIELDS SEARCHED**

Minimum documentation searched (classification system followed by classification symbols)
C01B31/00-31/36, B01D61/36, B01D71/02

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
Science Direct, WPI, JSTPlus(JDreamII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 3647985 B2 (Kanebo, Ltd.), 18 February 2005 (18.02.2005), paragraphs [0018], [0019], [0039], [0040] (Family: none) | 1-7 |
| A | JP 2009-196842 A (Bridgestone Corp.), 03 September 2009 (03.09.2009), paragraphs [0002], [0003] (Family: none) | 1-7 |

☐ Further documents are listed in the continuation of Box C.      ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 October, 2011 (26.10.11) | 08 November, 2011 (08.11.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**EP 2 759 519 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3647985 B
- WO 2008056803 A
- WO 2008078442 A